# EUROPEAN PATENT APPLICATION

(11) **EP 2 997 836 A1**
(43) Date of publication of application: **23.03.2016**
(21) Application number: 14181797.3
(22) Date of filing: 21.08.2014
(51) Int. Cl.: A23P 10/00, B29C 33/00, A23G 1/22, A23G 3/02

(54) **Mould**

(71) Applicant: Vandamme, Roger, 2980 's Gravenwezel (BE); Deleye, Carlos, 8800 Roeselare (BE)
(72) Inventor: Deleye, Carlos, 8800 ROESELARE (BE)
(74) Representative: Chielens, Kristof

(57) **Abstract**

A flexible shaping mould (1) and a manufacturing mould (5) to form the said flexible shaping mould (1), wherein the shaping mould (1) comprising receiving elements (2), with cavities (3) which are provided with an opening (15), wherein the receiving elements (2) are transformable between a first state and a second state by applying a force on the shaping mould (1), wherein in the first state, the dimensions of the opening (15) are smaller than the corresponding dimensions of the cavity (3) in the proximity of the opening (15) and wherein in the second state, the dimensions of the opening (15) are enlarged with respect to the first state by applying said force.

## Description

This invention relates, on the one hand, to a flexible shaping mould for shaping food, comprising one or more receiving elements, which each comprise a cavity and are provided with an opening through which the cavity is accessible, such that food is placeable inside the cavity to shape the food. It also relates to a method of producing a shaped food product, with such flexible shaping mould.

On the other hand, this invention relates to a manufacturing mould for the manufacturing of a flexible shaping mould with one or more receiving elements each comprising a cavity, in which the manufacturing mould comprises a first and a second counterpart each comprising a mould surface, in which the counterparts are provided to face each other such that the mould surfaces are located opposite each other and delimit a hollow into which material can be provided to form the flexible shaping mould, in which the first counterpart comprises a carrier and one or more shaping elements, in which each shaping element comprises a shaping part which protrudes from the carrier and substantially corresponds to a said cavity of a said receiving element, wherein the carrier and the one or more shaping parts form said mould surface of the first counterpart and in which the mould surface of the second counterpart comprises one or more recesses in which the one or more shaping parts at least partially extend when the counterparts face each other. This invention also relates to a method of producing a said flexible shaping mould, with such manufacturing mould.

Nowadays various shaping moulds are on the market. These moulds comprise cavities which are accessible through an opening, such that food products are placeable trough the opening into the cavity to shape the food products. These cavities can have different kind of shapes, such that food products with different shapes can be produced. The cavities of these moulds are always provided with a positive draft angle. This ensures that a food product, after it is shaped in a said cavity, is easily removable from the mould. This also allows the shaping mould to be produced by a manufacturing mould itself.

A food product, which has been shaped in such a shaping mould, will therefore always be broadest in the proximity of one side, namely the side which was located at the level of the opening during the shaping of the food product in the shaping mould. This side is often also the side with which the food product is placed on a flat surface. If this is the case, the ground surface of the food product is therefore broader than the rest of the food product. Specific forms, which for example have substantially the shape of a sphere, an ellipsoid, a torus, etc. can thus not be formed with the existing shaping moulds in one single piece.

For example it is not possible to shape in one single piece, a food product in the shape of a sphere from which a small spherical cap is cut off, such that the food product can be placed on a flat surface. Also it is not possible to form a quenelle shape with a flat ground surface in one single piece. Nowadays when one wants to form a sphere, one firstly forms two objects with the aid of a shaping mould, wherein these two objects have almost the shape of half a sphere, and secondly these objects are placed on top of each other. However, the cavities of the used shaping moulds are not perfect halve sphere shaped cavities, because the cavities have a positive draft angle. Therefore the shape of the formed product thus deviates somewhat from a sphere shape.

To form the known shaping moulds, one normally uses a manufacturing mould with two counterparts that can be placed facing each other such as to delimit a hollow. To form the shaping moulds, material is provided into said hollow in a mainly liquid state such that the hollow is completely filled with said material. The material then solidifies in the hollow whereafter the counterparts are removed. One counterpart has shaping elements and the other has recesses into which the shaping elements extend, wherein the shape of the shaping elements corresponds to the shape of the cavities, so that receiving elements with cavities can be formed. This means that the shaping elements are located inside the cavities after the material is solidified. The formed cavities are always provided with a positive draft angle such that the shaping elements can be removed from the formed cavities.

It is therefore an object of the invention to provide shaping moulds with which other shapes can be formed, such as the abovementioned shapes that could not be formed with the existing shaping moulds. It is also an object to provide a manufacturing mould with which such shaping mould can be produced.

This object is achieved by providing a flexible shaping mould for shaping food, comprising one or more receiving elements, which each comprise a cavity and are provided with an opening through which the cavity is accessible, such that food is placeable inside the cavity to shape the food, wherein at least the portion of the shaping mould, that is located in the proximity of the openings of the said one or more receiving elements, is manufactured from a deformable material and a said receiving element is transformable between a first state and a second state by applying a force on the shaping mould, wherein in the first state, the receiving element is provided to shape the food and the dimensions of the opening are smaller than the corresponding dimensions of the cavity in the proximity of the opening and wherein in the second state, the dimensions of the opening are enlarged with respect to the first state by applying said force.

With this shaping mould it is possible to shape food products of which the side, that was located at the level of the opening during the shaping of the food product in the shaping mould, has smaller dimensions than the corresponding dimensions of the food product in the proximity of said side. This is possible because the food is shaped in the receiving element during a period when the receiving element was in its first state. The food then gets the shape of the cavity, being the shape the cavity has in the first state of the receiving element. After the shaping of the food, the food is detachable from the receiving element by transforming the receiving element from its first state to its second state. Because the dimensions of the opening are enlarged during the transformation to the second state, the food product is easily detachable through the opening without touching or hardly touching the edge of the opening. This means that the shape of the food product will not change or will hardly change during the detachment from the receiving element. The dimensions of the opening can be enlarged because, at least in the proximity of the openings, the mould is manufactured from a deformable material such that the opening can be stretched. The deformable material is for example silicone. With such shaping moulds, food products can thus be shaped in various shapes which were not possible with the existing shaping moulds. When the shaping mould has several receiving elements, these receiving elements can have different shaped cavities such that different shaped food products can be made with one shaping mould.

Examples of shapes that can be made with such a shaping mould are for example sphere shapes of which a small spherical cap is cut off, quenelle shapes, torus shapes, etc.

Of course, to be able to detach the food product from the receiving element without substantially changing its shape, the shaped food product must have certain properties. It may not stick too much to the edges of the cavity, it must be more or less a solid product with a certain rigidity. For example desserts such as ice cream desserts, dessert comprising chocolate, pudding desserts etc. can be made in the desired shape with such a flexible shaping mould. Of course other food products can also be shaped with the shaping mould according to the invention. Such shaping moulds could for example also be placed inside an oven or the like during the shaping of the food product.

In a preferred embodiment, the said corresponding dimensions of the cavity continuously decrease in the direction towards the opening, in the proximity of the opening, when a said receiving element is in its first state. Even more preferably the edge of the receiving element at the level of the cavity, in the proximity of the opening, is concave, when a said receiving element is in its first state. With this, it is possible to form shaped products which are rounded/convex towards the side, which was located at the level of the opening during the shaping of the food product in the shaping mould. The entire edge of the receiving element at the level of the cavity can for example be substantially concave such that food products with substantially convex shapes can be formed. The cavity could for example have the shape of a sphere of which a spherical cap is cut to form the opening, or the shape of a quenelle of which a small section is cut off to form the opening.

Preferably, the shaping mould comprises a support base carrying the one or more receiving elements, in which the support base is deformable at the level of a said receiving element such that the opening of the said receiving element is enlargeable by applying a said force on the shaping mould. The presence of such a support base simplifies the transformation of the receiving element from its first state to its second state, because one can with the aid of the support base, for example trough the support base, apply a force to enlarge the opening of a said receiving element. Also, with such a support base two or more receiving elements can easily be supported/carried, such that with one mould two or more food products can be shaped at the same time. Of course it is also possible that the support base only supports/carries one receiving element.

Furthermore preferably, a said receiving element extends along both sides of the support base and the opening of the said receiving element is located at a distance from the support base. By applying a force on the support base near a said receiving element to enlarge the opening, the opening is enlarged. The amount and ease of the enlargement depends amongst others on the distance between the opening and the said support base and the distribution of the receiving element on both sides. When the support base is at a certain distance from the opening, a force applied on the support base is magnified by the lever effect such that the opening more easily enlarges. When the support base is attached to a central part of the receiving element, such that the receiving element extends substantially equally on both sides, the least force is needed to achieve a certain enlargement. With such a mould it is possible to make objects of which the dimensions of the side, that was located at the level of the opening during the shaping of the food product in the mould, is much smaller than the largest corresponding dimensions of the shaped food product. With this, it is therefore possible to make food products with for example a spherical shape with only a small deviation of the spherical shape at the level of the said side. These moulds can thus have cavities of which the opening in the first state has much smaller dimensions than the largest corresponding dimensions of the said cavity.

In a very preferred embodiment the shape of a said cavity, in the first state of the said receiving element, is substantially a sphere, a torus or an ellipsoid, with a deviation of that shape at the level of the opening. The deviation is necessary such that a food product can be detached trough the opening.

This object is also achieved by providing a manufacturing mould with the characteristics indicated in the second paragraph of this description, wherein in the proximity of the contact between a said shaping part and the carrier, the shaping part decreases in thickness in the direction towards said contact.

The shaping mould is formed by providing material into said hollow. The hollow could first be formed after which material is poured or injected into the hollow. Another option is that the material is first poured onto the mould surface of one of the counterparts after which the other counterpart is placed on top of it to form the hollow. The material which is present in the hollow is located around the said one or more shaping elements. Because the shaping part of a said shaping element is in contact with the carrier, a cavity with opening is formed when the material is located around the shaping part. Because the shaping part decreases in thickness in the direction towards the said contact between the carrier and the shaping part, the dimensions of the formed opening are smaller than the corresponding dimensions of the formed cavity in the proximity of the said formed opening. Therefore a shaping mould as described above can be made with such a manufacturing mould. The shaping elements and the carrier can be formed as a whole. If this is the case the shaping parts could be the shaping elements as such in which the shaping elements form protrusions. The shaping elements can also be connected to the carrier.

The counterparts of the manufacturing mould could be made of iron, but they could also be made of a synthetic material such as polyamide.

Preferably the shaping elements continuously decrease in thickness in the direction towards said contact, in the proximity of said contact. With such a manufacturing mould a shaping mould can be formed that has one or more cavities with openings of which, in the proximity of a said opening, the corresponding dimensions of a said cavity continuously decrease in the direction towards the opening.

Even more preferably the edge of the shaping part is convex, in the proximity of the contact between the outer surface of the said shaping part and the carrier. A shaping mould formed with such a manufacturing mould will have one or more cavities with openings in which, in the proximity of a said opening, the edge of a said receiving element is concave, at the level of the cavity. Also with such a shape the manufacturing process to form such a shaping mould with such a manufacturing mould is simpler.

In a preferred embodiment the shaping elements are releasably connected to the carrier. Hereby it is possible to switch between shaping elements with different shaped shaping parts. With one manufacturing mould it is therefore possible to make shaping moulds with different shaped cavities. The cleaning of the manufacturing mould is also easier when the shaping elements are apart from the carrier. Also it is much easier to produce a shaping mould with such a manufacturing mould. This is further explained.

More preferably the releasable connection between the shaping elements and the carrier is at least partially located on the outside of the manufacturing mould when the counterparts face each other. When the counterparts face each other it is possible to release the carrier from the shaping elements. Hereby the manufacturing of a shaping mould with such manufacturing mould is much simpler. This is also further explained.

In a specific embodiment the carrier comprises one or more recesses into which the shaping parts are partially located. Preferably a certain spacing is present between the edges of the recesses of the carrier and the shaping parts. A section of each shaping part is then located inside the said recess, while the other section is located outside the said recess. Here the contact between the carrier and the shaping part is between the carrier and the section of the shaping part that is located inside the recess of the carrier. With such a manufacturing mould it is possible to make a shaping mould wherein the shaping mould has a support base carrying the one or more receiving elements, wherein a said receiving element extends along both sides of the support base and in which the opening of the said receiving element is located at a distance from the support base. The advantages of a said shaped shaping mould are already explained. The space between the recesses and the portions of the shaping parts which are located inside said recesses ensures that the receiving elements of the shaped shaping mould are located on both sides of the support base of the shaping mould. Here the one or more recesses from the second counterpart are preferably placeable around the sections of the one or more shaping parts which are located outside the recesses of the carrier.

This invention also concerns a method of producing a flexible shaping mould, in which a manufacturing mould with a hollow is provided, wherein material, which is flexible in its solid state, is provided in its liquid state, and in which the material solidifies inside the hollow, whereafter the manufacturing mould is removed as such releasing the produced flexible shaping mould, in which the manufacturing mould is a manufacturing mould as described above and in which the said material solidifies around the shaping parts of the shaping elements such that cavities are formed and in which during the removal of the manufacturing mould, the shaping elements are withdrawn from the formed cavities.

The material could be poured into the hollow, the material could be placed on one of the counterparts after which the other counterpart is placed on top of it such as to form the hollow, the material could be injected for example under vacuum into the hollow, etc. The shaping elements can be withdrawn from the cavities because the material that has solidified in the hollow is flexible. When a said shaping element is pulled from a said cavity, the material that forms the cavity and the possible material that surrounds the cavity is flexible, allowing it to transform when the shaping element is pulled from the cavity. The material is for example silicone. Silicone is in its solid state flexible and keeps coming back to its original shape. Therefore during the manufacturing of a shaping mould according to the above-mentioned method, the silicone will solidify around the shaping parts, such that cavities are formed with the shape of the shaping parts. When the shaping elements are withdrawn from the formed cavities, the cavities will transform and they will return to their original shape which they had before the shaping elements were pulled out. When the shaping parts are more or less convex, the outer surface of the shaping parts is smooth such that the shaping elements simply can be pulled from the formed cavities.

The manufacturing mould could be the specific embodiment wherein the carrier comprises one or more recesses into which the shaping parts are partially located and wherein a certain spacing is present between the edges of the recesses of the carrier and the shaping parts. With such a manufacturing mould a shaping mould could be produced wherein the shaping mould comprises a support base carrying the one or more receiving elements, in which the said one or more receiving elements extend along both sides of the support base and in which the opening of the said receiving element is located at a distance from the support base. The part of the material that then solidifies in the spacing, that is present between the shaping parts and the recesses of the carrier, is then located on one side of the formed support base, while the part of the material that solidifies in the space, that is present between the recesses of the second counterpart and the shaping part, is then located on the other side of the formed support base.

In a preferred embodiment of this method the shaping elements are releasably connected to the carrier of the first counterpart such that the carrier is detachable from the shaping elements when the counterparts face each other, wherein during the removing of the first counterpart, the carrier is firstly detached from the shaping elements and removed such that the shaping elements are still located inside the formed cavities of the formed flexible shaping mould and secondly the shaping elements are withdrawn from the cavities. After the carrier is removed from the shaping elements, the shaping elements can be easily and carefully pulled from the cavities. It is much easier to pull the shaping elements form the cavities when the shaping elements are not attached to the carrier. If necessary each shaping element can be pulled separately from a said cavity.

This invention also relates to a method of producing a shaped food product, wherein a flexible shaping mould is used wherein the flexible shaping mould comprises one or more receiving elements, which each comprise a cavity and are provided with an opening through which the cavity is accessible, and wherein the food is poured through a said opening inside a said cavity as to shape the food in the shape of said cavity, wherein the flexible shaping mould is a shaping mould as described above, the one or more receiving elements are in its first state when the food is being shaped and to detach the shaped food product from the shaping mould, a stretching force is practised on the shaping mould such as to transform each receiving element from its first state to its second state such that the shaped food products are easily detachable from the one or more cavities.

Each shaped food product then has a side, which was located near the opening of a said cavity during the shaping of the product, that has smaller dimensions than the corresponding dimensions of the shaped food product in the proximity of this side. Normally this side is foreseen to be placed on a flat surface because this surface is normally also flat. This means that these shaped food products then have a ground surface which extends within the largest corresponding dimensions of the shaped food product. Possible shapes of food products that can be shaped with this method are spheres, quenelles etc., of which a small section is cut off such that they can be placed on a flat surface.

The present invention will now be explained in more detail by means of the following detailed description of embodiments of shaping moulds, manufacturing moulds and methods according to the present invention. The sole aim of this description is to give illustrative examples and to indicate further advantages and particulars of these shaping moulds, manufacturing moulds and these methods, and can therefore by no means be interpreted as a limitation of the area of application of the invention or of the patent rights defined in the claims.

Reference numerals are used in this detailed description to refer to the attached drawings, in which
- ***figure 1*** shows a cross section of a first embodiment of a manufacturing mould according to the invention;
- ***figure 2*** shows a cross section of a second embodiment of a manufacturing mould according to the invention;
- ***figure 3*** shows a frontal view of the manufacturing mould as shown in figure 2, where the counterparts are located at a distance from each other, wherein the shaping elements are not illustrated and wherein part of the edge of the hollow is shown in dashed lines;
- ***figure 4*** shows a top view of the second counterpart of the manufacturing mould shown in figures 2 and 3, in which the moulding surface can be seen;
- ***figure* 5** shows a top view of the first counterpart of the shaping mould shown in figures 2 and 3, in which the moulding surface can be seen and wherein the shaping elements are not illustrated;
- ***figure 6*** shows a frontal view of a shaping element;
- ***figure 7*** shows a cross section of a shaping mould according to the invention.

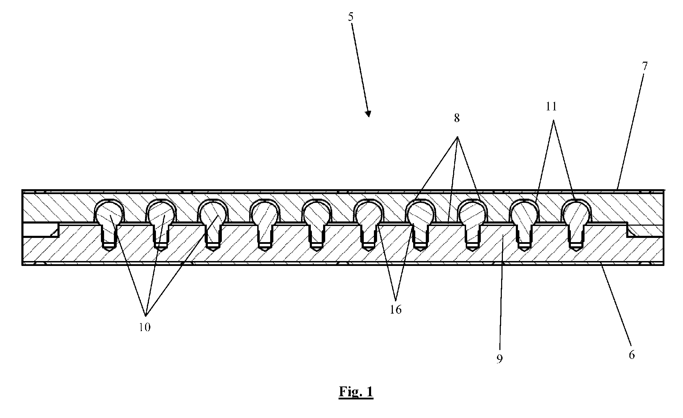

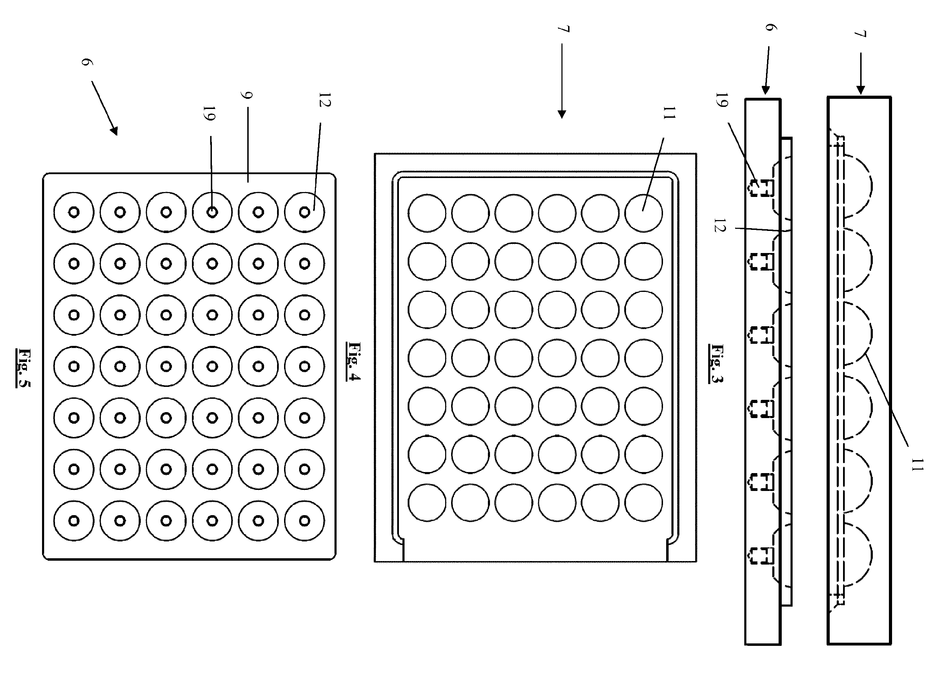

The two manufacturing moulds (5) which are shown in figures 1 to 3 each comprise a first and a second counterpart (6, 7). These moulds (5) can be used to manufacture flexible shaping moulds (1). The counterparts (6, 7) comprise mould surfaces in which the mould surfaces of the first and second counterpart (6, 7) are provided to be located opposite each other at some point during the manufacturing of a flexible shaping mould (1).

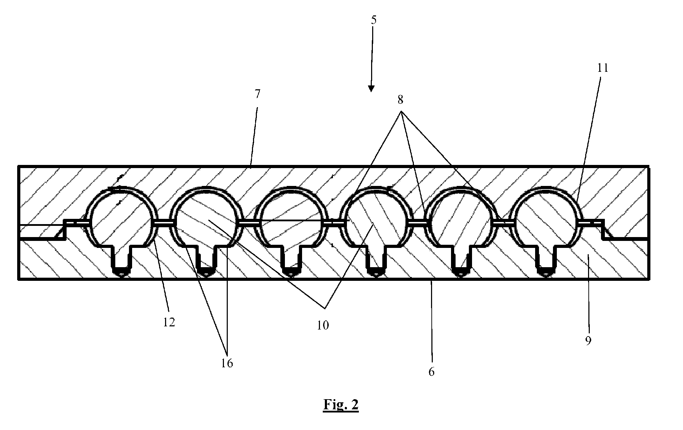

In figures 1 en 2 the first and the second counterpart (6, 7) face each other such that the moulding surfaces are located opposite each other. Here the moulding surfaces delimit a hollow (8) into which material can be provided to form a flexible shaping mould (1). The first counterpart (6) comprises a carrier (9) which carries several shaping elements (10). Each shaping element (10) comprises a connecting part (18), to connect the shaping element (10) with the carrier (9) and a shaping part (17), in which the outer surface of the shaping part (17) has a certain shape and in which the shaping part (17) protrudes from the carrier (9). A flexible shaping mould (1) that is manufactured with a said manufacturing mould (5) will have cavities (3) with the shape of the shaping parts (17). This will be clarified later on. The outer surface of a said shaping part (17) is in contact with carrier (9), and the carrier (9) and the outer surfaces of the shaping parts (17) form said mould surface of the first counterpart (6). The mould surface of the second counterpart (7) comprises one or more recesses (11) and when the first and second counterpart (6, 7) face each other, the shaping parts (17) at least partially extend into these recesses (11). At the level of the contact (16) between the outer surface of a said shaping part (17) and the carrier (9), the shaping part (17) decreases in thickness in the direction towards said contact (16). The shape of the shaping parts (17) of the manufacturing moulds (5) shown in figures 1 and 2 is the shape of a sphere of which a small spherical cap is cut off at the level of the said contact (16). The outer surface of each shaping part (17) is over its entire surface convex.

Of course other shapes are possible. It is also possible that the shaping elements (10) have shaping parts (17) with different shapes such that a flexible shaping mould (1) can be formed with cavities (3) with different shapes.

The shaping elements (10) are releasably connected to the carrier (9), such that the shaping elements (10) can be disconnected form the carrier (9). To form this releasable connection the shaping element (10) comprises a connection part (18) and the carrier (9) comprises a notch (19) into which the connection part (18) is put to connect the shaping element (10) to the carrier (9). Here the releasable connection between the shaping elements (10) and the carrier (9) is not partially located on the outside of the manufacturing mould (5) when the counterparts (6, 7) face each other. However this is preferably the case.

In the first embodiment of the manufacturing mould (5) as shown in figure 1, the shaping parts (17) are substantially located inside the recesses (11) of the second counterpart (7) when the counterparts (6, 7) face each other.

In the second embodiment of the manufacturing mould (5) as shown in figure 1, the carrier (9) additionally has recesses (12), wherein each shaping part (17) is partially located inside a said recess (12). A section of each shaping part (17) is thus located outside a said recess (12) of the carrier (9), while the other section of each shaping part (17) is located inside the recess (12) of the carrier (9). Additionally there is a certain spacing between the edge of the recesses (12) of the carrier (9) and the outer surface of said other section of the shaping parts (17). Only the section of the shaping parts (17) that is located outside the said recesses (12) of the carrier (9) is located inside the recesses (11) of the second counterpart (7) when the counterparts (6, 7) face each other.

How such a manufacturing mould (5) is used to form a shaping mould (1) and how the formation is done, is hereafter explained.

To form a shaping mould (1) the two counterparts (6, 7) are placed against each other such that the moulding surfaces are opposite each other and form the said hollow (8). The material that is used to form the shaping mould (1) can be provided into the hollow (8) in different ways. For example the hollow (8) could be first formed whereafter the material is poured or injected into the hollow (8). However the material could also be firstly put onto one moulding surface of a said counterpart (6, 7), whereafter the other counterpart (6, 7) is put onto the first named counterpart (6, 7) to form the hollow (8). The material that is used to form the shaping mould (1) is flexible in its solid state and is provided into the hollow (8) in its liquid state. This material could for example be silicone. The hollow (8) is almost completely filled with the material. The material will thus surround the shaping parts (17) completely and will thus solidify around the shaping parts (17). The solidified material has substantially the same shape as the hollow (8).

When the first embodiment of the manufacturing mould (5) is used, the solidified material will have several receiving elements (2) each comprising an opening (15), in which these receiving elements (2) were formed between the recesses (11) of the second counterpart (7) and the shaping parts (17). Also the solidified material will have a support base (4) carrying the one or more receiving elements (2) at the level of their openings (15).

When one uses the second embodiment of the manufacturing mould (5), the solidified material will have several receiving elements (2) each comprising an opening (15). These receiving elements (2) are formed on the one hand between the recesses (11) of the second counterpart (7) and the shaping parts (17) and on the other hand between the recesses (12) of the carrier (9) and the shaping parts (17). Also the solidified material will have a support base (4) carrying the one or more receiving elements (2), in which the receiving elements (2) extend along both sides of the support base (4) and in which the opening (15) of the said receiving element (2) is located at a distance from the support base (4).

With both embodiments of the manufacturing mould (5) the receiving elements (2) will have a cavity (3) of which the shape corresponds to a said shaping part (17) and in which the cavity (3) is accessible through the opening (15). Because the shaping parts (17) decrease in thickness at the level of the contact (16) between the shaping parts (17) and the carrier (9) towards said contact (16), the dimensions of the openings (15) of the receiving elements (2) are smaller than the corresponding dimensions of the cavities (3) in the proximity of the openings (15).

To remove the manufacturing mould (5) from the solidified material, the shaping elements (10) are withdrawn from the cavities (3) of the formed receiving elements (2). Although the dimensions of the thickest portion of each shaping part (17) are larger than the opening (15) of the receiving elements (2), the shaping elements (10) can be removed from it because the solidified material is flexible. The dimensions of the opening (15) can therefore be enlarged such that the shaping elements (10) can be removed, and the manufacturing mould (5) can be removed.

The shaping elements (10) can be more easily removed, when the carrier (9) is detachable from the shaping elements (10) when the counterparts (6, 7) face each other. This is possible if the connection between the shaping elements (10) and the carrier (9) is at least partially located on the outside of the manufacturing mould (5) when the counterparts (6, 7) face each other. During the removing of the first counterpart (6), the carrier (9) is then firstly detached from the shaping elements (10) and removed such that the shaping elements (10) are still located inside the formed cavities (3) of the solidified material and secondly the shaping elements (10) are withdrawn from the cavities (3).

With the manufacturing moulds (5) as illustrated on the figures 1 to 3 a flexible shaping mould (1) for shaping food can be obtained in which this flexible shaping mould (1) comprises several receiving elements (2), which each comprise a cavity (3) and are provided with an opening (15) through which the cavity (3) is accessible, such that food is placeable inside the cavity (3) to shape the food, where a said receiving element (2) is transformable between a first state and a second state by applying a force on the shaping mould (1), wherein in the first state, in the proximity of the opening (15), the dimensions of the opening (15) are smaller than the corresponding dimensions of the cavity (3) and wherein in the second state, the dimensions of the opening (15) are enlarged with respect to the first state by applying said force.

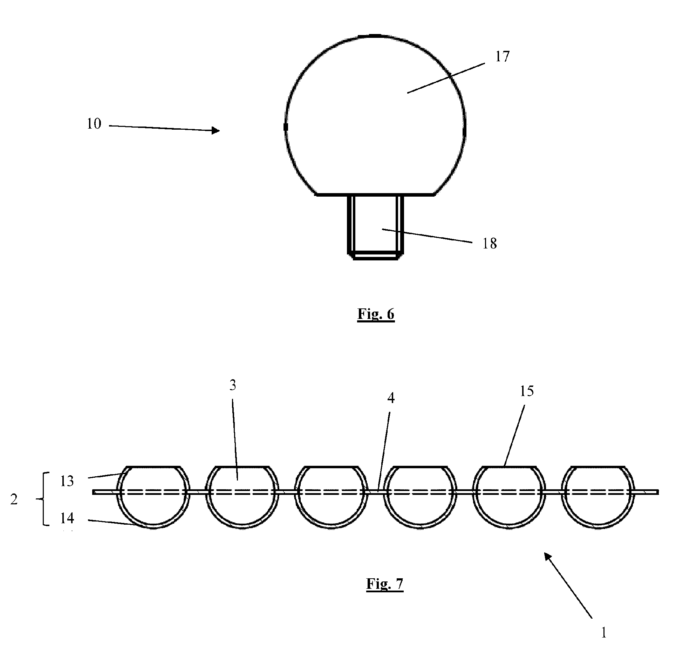

The flexible shaping mould (1) formed with the manufacturing mould (5) of the first embodiment comprises a support base (4) and receiving elements (2) in which the support base (4) carries these several receiving elements (2) at the level of the openings (15) of the receiving elements (2). The flexible shaping mould (1) formed with the manufacturing mould (5) of the second embodiment comprises a support base (4) and receiving elements (2) in which the support base (4) carries these several receiving elements (2) centrally such that the receiving elements (2) extend on both sides of the support base (4). A first part (13) of the receiving element (2) comprises the opening (15) and is located above the support base (4), while the second part (14) of the receiving element (2) is located below the support (4). Such a flexible shaping mould (1) is shown in figure 7.

The flexible shaping moulds (1) that are formed with the manufacturing moulds (5) can be used to shape food products.

To shape the food products with these flexible shaping moulds (1), the food product is placed inside the cavities (3) of the receiving elements (2). After this the food product is shaped inside the cavities (3) for a certain period. During the shaping of the product and also normally during the placing of the food product inside the cavities (3), the receiving elements (2) are in their first state. How the shaping in this certain period happens, depends on the type of food product.

For example if the food product is a type of pudding, ice cream etc., the food product is poured into the cavities (3) of the receiving elements (2) when it is more or less in a liquid state. The receiving elements (2) are almost completely filled. After this, the shaping mould (1) resides in a cool environment, for example it resides in a refrigerator/freezer, such that the food product can solidify. After this the food product is ejected from the shaping mould (1) by applying a force on the shaping mould (1) such that the receiving elements (2) transform to their second state such that the openings (15) are enlarged and the shaped food product can freely pas through the opening (15).

If the food product is a kind of dough that needs to be baked, the dough is poured into the cavities (3) of the receiving elements (2) and depending on how much the dough will rise during the baking, the receiving elements (2) are partially filled or almost completely filled. After the filling, the shaping mould (1) is put into an oven and the food product is baked. After the baking, the baked food product is ejected from the shaping mould (1) by applying a force on the shaping mould (1) such that the receiving elements (2) transform to their second state such that the openings (15) are enlarged and the shaped food product can freely pas through the opening (15).

## Claims

1. A flexible shaping mould (1) for shaping food, comprising one or more receiving elements (2), which each comprise a cavity (3) and are provided with an opening (15) through which the cavity (3) is accessible, such that food is placeable inside the cavity (3) to shape the food, **characterized in that** at least the portion of the shaping mould (1), that is located in the proximity of the openings (15) of the said one or more receiving elements (2), is manufactured from a deformable material and a said receiving element (2) is transformable between a first state and a second state by applying a force on the shaping mould (1), wherein in the first state, the receiving element (2) is provided to shape the food and the dimensions of the opening (15) are smaller than the corresponding dimensions of the cavity (3) in the proximity of the opening (15) and wherein in the second state, the dimensions of the opening (15) are enlarged with respect to the first state by applying said force.

2. Shaping mould (1) according to claim 1, **characterized in that**, when a said receiving element (2) is in its first state, the said corresponding dimensions of the cavity (3) continuously decrease in the direction towards the opening (15), in the proximity of the opening (15).

3. Shaping mould (1) according to claim 2, **characterized in that**, when a said receiving element (2) is in its first state, the edge of the receiving element (2) at the level of the cavity (3), in the proximity of the opening (15), is concave.

4. Shaping mould (1) according to one of the preceding claims, **characterized in that** the shaping mould (1) comprises a support base (4) carrying the one or more receiving elements (2), in which the support base (4) is deformable at the level of a said receiving element (2) such that the opening (15) of the said receiving element (2) is enlargeable by applying a said force on the shaping mould (1).

5. Shaping mould (1) according to claim 4, **characterized in that** a said receiving element (2) extends along both sides of the support base (4) and in which the opening (15) of the said receiving element (2) is located at a distance from the support base (4).

6. Shaping mould (1) according to one of the preceding claims, **characterized in that** the shape of a said cavity (3), in the first state of the said receiving element (2), is substantially a sphere, a torus or an ellipsoid, with a deviation of that shape at the level of the opening (15).

7. Manufacturing mould (5) for the manufacturing of a flexible shaping mould (1) with one or more receiving elements (2) each comprising a cavity (3), in which the manufacturing mould (5) comprises a first and a second counterpart (6, 7) each comprising a mould surface, in which the counterparts (6, 7) are provided to face each other such that the mould surfaces are located opposite each other and delimit a hollow (8) into which material can be provided to form the flexible shaping mould (1), in which the first counterpart (6) comprises a carrier (9) and one or more shaping elements (10), in which each shaping element (10) comprises a shaping part (17) which protrudes from the carrier (9) and substantially corresponds to a said cavity (3) of a said receiving element (2), wherein the carrier (9) and the one or more shaping parts (17) form said mould surface of the first counterpart (6) and in which the mould surface of the second counterpart (7) comprises one or more recesses (11) in which the one or more shaping parts (17) at least partially extend when the counterparts (6, 7) face each other **characterized in that**, in the proximity of the contact (16) between a said shaping part (17) and the carrier (9), the shaping part (17) decreases in thickness in the direction towards said contact (16).

8. Manufacturing mould (5) according to claim 7, **characterized in that** in the proximity of the contact (16) between a said shaping part (17) and the carrier (9), the edge of the shaping part (17) is convex.

9. Manufacturing mould (5) according to claim 7 or 8, **characterized in that** the shaping elements (10) are releasably connected to the carrier (9).

10. Manufacturing mould (5) according to claim 9, **characterized in that** the releasable connection between the shaping elements (10) and the carrier (9) is at least partially located on the outside of the manufacturing mould (5) when the counterparts (6, 7) face each other.

11. Manufacturing mould (5) according to one of the claims 7 to 10, **characterized in that** the carrier (9) comprises one or more recesses (12) into which the shaping parts (17) are partially located.

12. Manufacturing mould (5) according to claim 11, **characterized in that** a certain spacing is present between the edges of the recesses (12) of the carrier (9) and the shaping parts (17).

13. A method of producing a flexible shaping mould (1), in which a manufacturing mould (5) with a hollow (8) is provided, wherein material, which is flexible in its solid state, is provided in its liquid state, and in which the material solidifies inside the hollow (8), whereafter the manufacturing mould (5) is removed as such releasing the produced flexible shaping mould (1), **characterized in that** the manufacturing mould (5) is a manufacturing mould (5) as described in one of the claims 7 to 12 and that the said material solidifies around the shaping parts (17) of the shaping elements (10) such that cavities (3) are formed and that during the removal of the manufacturing mould (5), the shaping elements (10) are withdrawn from the formed cavities (3).

14. A method according to claim 13, **characterized in that** the shaping elements (10) are releasably connected to the carrier (9) of the first counterpart (6) such that the carrier (9) is detachable from the shaping elements (10) when the counterparts (6, 7) face each other, wherein during the removing of the first counterpart (6), the carrier (9) is firstly detached from the shaping elements (10) and removed such that the shaping elements (10) are still located inside the formed cavities (3) of the formed flexible shaping mould (1) and secondly the shaping elements (10) are withdrawn from the cavities (3).

15. A method of producing a shaped food product, wherein a flexible shaping mould (1) is used wherein the flexible shaping mould (1) comprises one or more receiving elements (2), which each comprise a cavity (3) and are provided with an opening (15) through which the cavity (3) is accessible, and wherein the food is poured through a said opening (15) inside a said cavity (3) as to shape the food in the shape of said cavity (3), **characterized in that** the flexible shaping mould (1) is a shaping mould (1) as described in one of the claims 1 to 6, the one or more receiving elements (3) are in its first state when the food is being shaped and to detach the shaped food product from the shaping mould (1), a stretching force is practised on the shaping mould (1) such as to transform each receiving element (3) from its first state to its second state such that the shaped food products are easily detachable from the one or more cavities (3).
